# EUROPÄISCHE PATENTSCHRIFT

(11) **EP 2 179 490 B1**
(45) Veröffentlichungstag und Bekanntmachung des Hinweises auf die Patenterteilung: **09.02.2011**
(21) Anmeldenummer: 08787024.2
(22) Anmeldetag: 08.08.2008
(51) Int. Cl.: H02K 3/52

(54) **SPULENTRÄGER MIT SONDERKONTUR**
SPOOL CARRIER HAVING A SPECIAL CONTOUR
SUPPORT DE BOBINE DE CONTOUR SPECIAL

(30) Priorität: 09.08.2007 DE 102007037611
(43) Veröffentlichungstag der Anmeldung: 28.04.2010
(73) Patentinhaber: Continental Automotive GmbH, 30165 Hannover (DE)
(72) Erfinder: SCHEIN, Uwe, 34260 Kaufungen (DE); WERNER, Klaus, 61476 Kronberg (DE); ZUBER, Heinrich, 65824 Schwalbach am Taunus (DE)
(86) Internationale Anmeldenummer: PCT/EP2008/060428
(87) Internationale Veröffentlichungsnummer: WO 2009/019309

(56) Entgegenhaltungen:
- EP-A- 1 317 048
- DE-U1- 20 204 507
- US-A- 5 420 559

## Beschreibung

Die Erfindung betrifft einen Spulenträger für eine Spulenanordnung und bezieht sich im Besonderen auf Spulenträger zur Herstellung von Polzähnen in Elektromotoren.

Bürstenlose Elektromotoren weisen in der Regel einen mit Permanentmagneten besetzten Rotor auf, der innerhalb eines mehrere Statorspulen tragenden Stators drehbar gelagert ist. Die einzelnen Statorspulen sind über Wicklungsköpfe meist zu mehrphasigen (üblicherweise dreiphasigen) Statorspulensträngen zusammengefasst, die mittels einer Umrichtelektronik elektrisch kommutiert werden. Bürstenlose Elektromotoren zeichnen sich durch ein geringes Wartungsaufkommen und einen gegenüber Bürstenmaschinen höheren Wirkungsgrad aus. Sie eignen sich daher insbesondere zur Verwendung in elektromechanischen Bremsvorrichtungen, wie beispielsweise Keilbremsen.

Um bei kleinen Abmessungen hohe Motorleistungen zu erzielen, müssen die Statorspulen der einzelnen Statorpole als Einzelzahnwicklungen mit einer hohen Wickeldichte ausgeführt sein. Bei einer hohen Wickeldichte ist das von den Leerräumen zwischen den Spulendrähten eingenommene Volumen minimal bzw. der vom Spulendrahtmaterial - in der Regel Kupfer - eingenommene Raum maximal. Der Anteil des vom Spulendrahtmaterial eingenommenen Raums im Verhältnis zum Gesamtvolumen der Spulenwicklung wird Kupferfüllfaktor genannt. Bei einem über eine höhere Windungszahl realisierten höheren Kupferfüllfaktor, d.h. mittels einer dichteren Packung der Windungen, erhält man bei unverändert gebliebenem Drahtdurchmesser und bei gleichem Spulenstrom ein größeres Statorpolfeld und damit ein höheres Motordrehmoment, wobei das Spulenvolumen unverändert beibehalten wird.

Das erzielbare Motordrehmoment wird jedoch nicht nur über den Kupferfüllfaktor der einzelnen Statorpole, sondern auch über den Kupferfüllfaktor der Statoranordnung insgesamt bestimmt. Hierzu müssen die Statorspulen benachbarter Statorpole möglichst lückenlos aneinandergrenzen, wozu die aneinandergrenzenden Seitenflächen der Polzähne, d.h. die Seitenflächen der an den Statorpolen angeordneten Statorspulen, möglichst eben sein müssen. Erreicht wird dies durch eine orthozyklische Wicklung der Polzähne, bei der die Drähte einer Wicklungslage in den Nuten (d.h. den Vertiefungen in der Oberfläche einer Wicklungslage im Bereich zweier aneinandergrenzender Windungsdrähte) der jeweils darunter befindlichen Wicklungslage geführt werden. Im Querschnitt zeigt die Spulenwicklung dadurch eine bienenwabenähnliche, hexagonale Packungsstruktur, bei der ein optimaler Nutausfüllungsgrad (d.h. höchstmöglicher Küpferfüllfaktor) und eine innerhalb eines halben Drahtdurchmessers ebene äußere Begrenzung der Wicklung erzielt werden.

Die für die Polzähne der oben beschriebenen Elektromotoren verwendeten Statorspulen sind um einen Spulenträger, ähnlich wie dieser offenbart im EP 1 317 048, mit im Querschnitt rechteckförmigen Wickelkörper gewickelt, dessen Länge seine Breite um ein Vielfaches übersteigt. Um auch bei derartigen Längen-zu-Breitenverhätnissen eine wie oben beschriebene orthozyklische Wicklung zu erhalten, werden Wicklungs- wie Lagensprung einer Spulenwicklung jeweils an einer Frontfläche des Wickelkörpers vorgenommen. Würden Windungssprung oder Lagensprung an einer der Seitenflächen des Wickelkörpers zu liegen kommen, dann würde diese Seitenfläche eine Erhebung aufweisen und nicht mehr die für einen eng benachbarten Einbau der Polzähne erforderliche Ebenheit aufweisen.

Es hat sich jedoch gezeigt, dass eine automatisierte orthozyklische Wicklung bei langen schmalen Spulenträgern mit rechteckförmigem Querschnitt nicht möglich ist, da die Wicklungs- und Lagensprünge nicht an der dafür vorgesehenen Frontfläche des Wickelkörpers erzwungen werden können. Daher wird das Wickeln der Spulenträger für schmale Statorpole gegenwärtig von Hand ausgeführt. Eine den Kostenanforderungen des Automobilbaus angepasste Großserienfertigung ist so jedoch nicht möglich.

Der Erfindung liegt daher die Aufgabe zugrunde, einen Spulenträger und eine Spule anzugeben, bei denen der Wicklungs- und der Lagensprung einer automatisch aufgebrachten Wicklung stets an einer bestimmten Frontfläche des Wickelkörpers erzwungen werden können.

Die Aufgabe wird gemäß den unabhängigen Ansprüchen der Erfindung gelöst.

Die Erfindung umfasst einen Spulenträger mit einem Wickelkörper, dessen Mantelfläche einen trapezförmigen Querschnitt mit zwei im Wesentlichen rechten Winkeln und einem spitzen Winkel aufweist.

Durch den spitzen Winkel des Wickelkörpers lässt sich die Lage des Wickeldrahts vor jedem Windungs- wie Lagensprung fixieren, so dass die Neigung des Wickeldrahts zum Überspringen der vorgesehenen Positionen beim Windungs- bzw. Wicklungslagensprung reduziert wird. Ferner wird durch die mit dem spitzen Winkel verbundene Schrägstellung der Frontfläche deren Breite vergrößert. Hierdurch reduziert sich der Winkel, mit dem der Draht entlang der Frontfläche geführt werden muss, um den zum Windungs- bzw. Lagensprung erforderlichen Drahtversatz herzustellen. Mit einem geringeren Schrägführungswinkel reduzieren sich aber auch die über den Wickelzug auf den Draht ausgeübten Querkräfte.

Die Erfindung umfasst ferner Spulenanordnung mit einem entsprechenden Spulenträger, wobei der Spulendraht an der stumpfwinkligen Kante des Wickelkörpers beginnend parallel zu den Stirnflächenkanten des Wickelkörpers an der an der stumpfwinkligen Kante angrenzenden Seitenfläche entlang um den Wickelkörper herum bis zur spitzwinkligen Kante des Wickelkörpers geführt ist und an der Frontfläche von der spitzwinkligen Kante zu stumpfwinkligen Kante, so schräg zur Stirnflächenkante geführt ist, dass er an der stumpfwinkligen Kante bei einem Windungssprung unmittelbar neben dem Wickeldraht der vorhergehenden Windung und bei einem Wickellagensprung in die nächstgelegene Nut zwischen zwei Windungen der vorherigen Lage bzw. gegebenenfalls zwischen Flansch und Windung der vorherigen Lage zu liegen kommt.

Eine entsprechende Spulenanordnung weist eine kompakte Bauform mit innerhalb des Wickeldrahtradius glatten Außenflächen auf, die im Stator eines Motors somit lückenlos nebeneinander eingebaut werden können.

Außerdem umfasst die Erfindung einen Elektromotor mit zumindest einem Polzahn, der eine solche Spulenanordnung umfasst, sowie eine elektromechanische Bremsvorrichtung, die mit einem solchen Elektromotor ausgestattet ist. Durch die glatte Begrenzung der Außenflächen der Spulenanordnung treten keine Vorschädigungen der Polzähne beim Einbau auf, so dass ein zuverlässiger Motor erreicht wird, der zu einer sicheren Funktion einer elektromechanischen Bremse beiträgt.

In diesem Zusammenhang wird darauf hingewiesen, dass die in dieser Beschreibung und den Ansprüchen zur Aufzählung von Merkmalen verwendeten Begriffe "umfassen", "aufweisen", "beinhalten", "enthalten" und "mit", sowie deren grammatikalische Abwandlungen, generell eine nichtabschließende Aufzählung von Merkmalen, wie z.B. Verfahrensschritten, Einrichtungen, Bereichen, Größen und dergleichen bezeichnen, die in keiner Weise das Vorhandensein anderer oder zusätzlicher Merkmale oder Gruppierungen von anderen oder zusätzlichen Merkmalen ausschließt.

Die Erfindung wird in ihren abhängigen Ansprüchen weitergebildet.

Vorzugsweise beträgt der spitze Winkel 65 Grad, wodurch eine sichere Fixierung des Wickeldrahts vor den Windungs- und Lagensprüngen erreicht wird, ohne die Biegeradien des Wickeldrahts an dieser Kante zu eng zu machen bzw. die Baulänge des Spulenträgers übermäßig zu verlängern.

Um ein abrutschen des Wickeldrahts vom Wickelkörper zu verhindern, grenzt zweckmäßig zumindest eine der beiden Stirnflächen des Wickelkörpers an einen Flansch an, der über die Querschnittsfläche des Wickelkörpers hinausragt. Vorteilhaft grenzt jede der beiden Stirnflächen des Wickelkörpers an jeweils einen Flansch an, der über die Querschnittsfläche des Wickelkörpers hinausragt, so dass der Wickeldraht fest auf dem Wickelkörper fixiert ist.

Zur einfachen Befestigung auf dem Eisenkern eines Statorpols weist der Spulenträger zweckmäßigerweise eine Offnung auf, die sich durch den Wickelkörper hindurch erstreckt. Um die Spulengeometrie unabhängig von der Eisenkerngeometrie halten zu können, ist die Querschnittsgeometrie der Öffnung günstigerweise von der der Mantelfläche des Wickelkörpers verschieden ausgeführt. Ein fester Sitz des Spulenträgers auf dem Statorpol wird vorteilhaft erreicht, wenn der Querschnitt der Öffnung zwischen den Stirnflächen des Wickelkörpers nicht konstant ist.

In einer alternativen Ausführungsform weist der Wickelkörper einen Eisenkern auf, der so von einem elektrisch isolierenden Material umgeben ist, dass die Mantelfläche des Wickelkörpers mit trapezförmigem Querschnitt von Außenflächen des elektrisch isolierenden Materials gebildet ist.

Vorzugsweise ist die oben beschriebene Bremsvorrichtung als selbstverstärkende Keilbremse ausgebildet, da diese die Energie des abzubremsenden Gegenstands zur Verstärkung der Bremskraft nutzt, und so mit kleineren Elektromotoren betrieben werden kann.

Weitere Merkmale der Erfindung ergeben sich aus der folgenden Beschreibung erfindungsgemäßer Ausführungsbeispiele in Verbindung mit den Ansprüchen sowie den Figuren. Die einzelnen Merkmale können bei einer Ausführungsform gemäß der Erfindung je für sich oder zu mehreren verwirklicht sein. Bei der nachfolgenden Erläuterung einiger Ausführungsbeispiele der Erfindung wird auf die beiliegenden Figuren Bezug genommen, von denen
- Figur 1: einen herkömmlichen Spulenträger für Polzähne und
- Figur 2: einen zum automatischen Aufbringen einer orthozykli- schen Wicklung geeigneten Spulenträger für Polzähne zeigt.

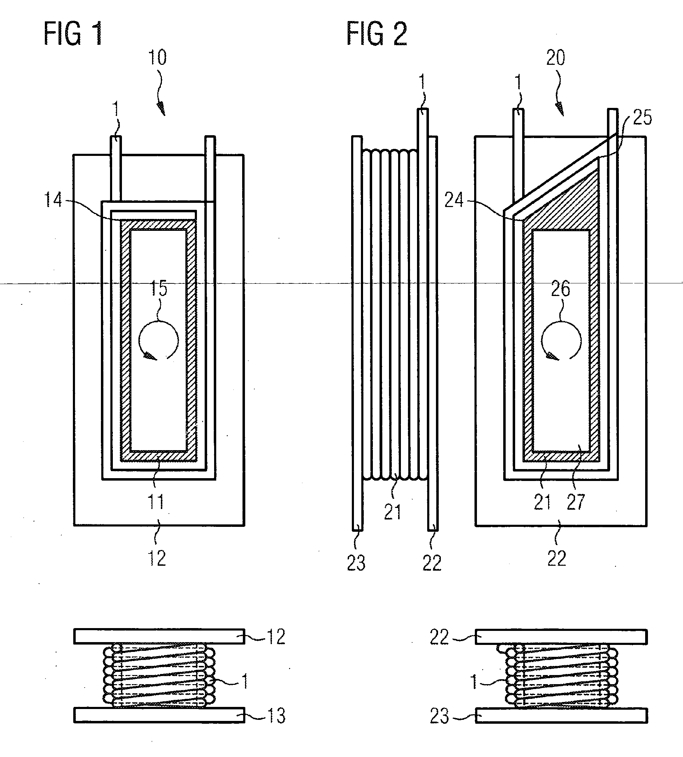

In der Figur 1 ist eine Querschnitts- und eine Frontansicht eines herkömmlichen Spulenträgers 10 zur Verwendung in Statorpolen dargestellt. Der Spulendraht 1 wird auf den quaderförmigen Wickelkörper 11 des Spulenträgers 10 aufgewickelt. Zur Stabilisierung der Spulenwicklung auf dem Wickelkörper befindet sich an jeder der beiden Stirnflächen des Wickelkörpers ein Flansch 12 bzw. 13. Zum Herstellen einer orthozyklischen Wicklung wird der Wickeldraht 1 in Wickelrichtung 15 an einer Flanschinnenfläche entlang (in der Figur entgegen dem Uhrzeigersinn) um drei Seitenflächen des Wickelkörpers geführt. An der vierten (in der Figur oberen) Seitenfläche wird der Wickeldraht zunächst von der Flanschfläche weg und zur Überführungskante 14 und dort neben dem Draht 1 der vorherigen Windung geführt, um dann am Draht der jeweils unteren Windung angrenzend immer weiter um den Wickelkörper geführt zu werden, bis der Abstand zur gegenüberliegenden Flanschfläche nicht mehr zum Einbringen einer weiteren Windung ausreicht, womit auf den Wickelkörper eine vollständige Wickellage aufgebracht wurde.

Die nächste Wickellage wird, wie der Frontansicht im unteren Teil von Figur 1 zu entnehmen ist, über die zuvor aufgebrachte Wickellage gelegt, indem der Wickeldraht 1 an der vierten Seitenfläche in Richtung der jeweils gegenüberliegenden Flanschfläche geneigt so zur Überführungskante 14 geführt wird, dass er dort in die Nut zwischen den beiden der gegenwärtig nächsten Flanschfläche am nächsten gelegenen Windungen der zuvor aufgebrachten Wickellage überführt wird. Bei einem Lagensprung zu einer der weiteren Wickellage kann der Draht in die Nut zwischen dem Draht der letzten Windung und dem benachbarten Flansch überführt werden.

Somit entsteht ein äußerst kompaktes Wicklungsprofil, bei dem die einzelnen Windungen einer Wicklungslage parallel nebeneinander liegen und die Wicklungsdrähte einer Wicklungslage an drei Seitenflächen der Wicklung in den Vertiefungen (bzw. den Nuten) an der Oberfläche der vorherigen Wicklungslage geführt werden, wobei sich die Nuten zwischen zwei Windungen durch die runde Querschnittsgeometrie des Spulendrahts ergeben. An der vierten Seitenfläche überkreuzen sich die Windungen zweier übereinander liegender Wicklungslagen, wie es in der Frontansicht im unteren Teil von Figur 1 veranschaulicht ist (zum besseren Verständnis der Anordnung sind in dieser Darstellung die Wicklungsdrähte der unteren Wicklungslage nicht verdeckt gezeichnet).

Zur Ausbildung des Windungs- wie des Lagensprungs müssen die Windungsabschnitte an der vierten Seitenfläche daher, wie in der Figur 1 zu sehen ist, unter einem Winkel zu den Flanschflächen bzw. zu den stirnflächenseitigen Kanten des Wickelkörpers verlaufen. Je kürzer (in Richtung der Drahtführung) diese Seitenfläche ist, desto größer ist dieser Winkel und damit auch die Neigung zum Überspringen eines zuvor aufgewickelten Drahtes, bzw. ein Herausspringen aus der gewünschten Nutposition.

Bei schmalen Spulenträgern kommt es bei einem automatisierten Wickeln daher häufig zu unkontrollierten Windungs- und Lagensprüngen, wodurch man statt einer orthozyklischen eine mehr oder weniger ungeordnete Wicklung erhält. Da bei einer ungeordneten Wicklung die an den Längsseiten erforderliche kompakte Anordnung der Spulendrähte nicht mehr gegeben ist, kann es beim Einbau dieser fehlerhaft gewickelten Statorspulen in den Stator eines Motors zu Beschädigungen kommen.

Um bei einem automatischen Bewickeln schmaler Spulenträger solch unkontrollierte Windungs- und Lagensprünge zu vermeiden, ist die Frontfläche an einer der beiden Schmalseiten des Wickelkörpers 21 von Figur 2 schräg zu dessen Längsseiten angeordnet. Der Querschnitt des Wickelkörpers erhält hierdurch eine trapezförmige Gestaltung. Durch diese Schrägstellung ist die Breite dieser Frontfläche größer als die des Wickelkörpers 21, wodurch sich der Versatz des Wickeldrahts 1 beim Windungs- wie beim Lagensprung an der schräg stehenden Frontfläche verringert. Da die auf den Draht über den Wickelzug wirkenden Querkräfte bei geringerem Versatz ebenfalls geringer sind, verringert sich somit die Neigung des Wickeldrahts zum Überspringen der vorgesehenen Positionen.

Durch die Schrägstellung der Frontfläche bildet sich ein spitzer Kantenwinkel 25 aus, an dem der Wickeldraht 1 durch den Wickelzug besser in seiner Lage fixiert wird. Liegt diese spitzwinklige Kante in Wickelrichtung vor der (nun stumpfwinkligen) Überführungskante 24, so erhält man eine stabile Ausgangsposition vor einem Windungs- bzw. Wicklungslagensprung. Bei höheren Wickellagen wird diese Fixierung des Wickeldrahts an der spitzen Kante 25 insbesondere durch das verbesserte Einpressen des Drahts über den Wickelzug in die zwischen zwei Drähten der Vorgängerlage ausgebildete Nut unterstützt. Damit können auch bei einer automatisierten Bewicklung des Spulenträgers 20 exakte Windungs- und Lagensprünge und damit eine fehlerfreie orthozyklische Umwicklung der Mantelfläche des Wickelkörpers 21 ohne zusätzliche Hilfsmittel erreicht werden.

Prinzipiell wäre die Fixierung des Drahts 1 vor einem Wicklungs- oder Lagensprung umso besser, je spitzwinkliger die Kante 25 ausgeführt sein würde. Außerdem nimmt die Breite der Frontfläche mit kleiner werdendem Winkel zu, und somit muss der Draht 1 weniger schräg über diese Fläche geführt werden. Allerdings nimmt die Länge des Spulenträgers durch die spitzwinklige Ausführung dieser Wickelkörperkante zu, so dass sich die Baugröße entsprechend ausgestatteter Elektromotoren vergrößern kann. Daher wird die Schrägstellung der Frontfläche nach Möglichkeit auf ein Maß beschränkt, bei der der Biegeradius des Windungsdrahts 1 um die spitzwinklige Kante 25 auch bei den äußeren Wicklungslagen (der Biegeradius nimmt als Funktion des Drahtdurchmessers mit zunehmender Lagenzahl zu) noch groß genug ist, um eine gute Lagefixierung des Drahts zu garantieren, und die Breite der Frontfläche ausreichend ist, damit die auf den Draht beim Wickeln einwirkenden Querkräfte klein genug sind, um ein Überspringen der vorgesehenen Lage zu vermeiden. Es hat sich gezeigt, dass bei Winkeln von etwa 65 Grad bereits eine zur automatischen Bewicklung ausreichende Lagestabilisierung des Wickeldrahts 1 beim Windungs- bzw. Lagensprung gegeben ist. Die hierdurch bedingte Verlängerung der Statorspule ist insbesondere bei den für Statorpole üblichen Längen-zu-Breitenverhältnissen von mehr als 4:1 noch klein genug, um die Baugröße des Motors nicht wesentlich zu beeinflussen.

Der Spulenträger 20 von Figur 2 weist ferner zwei Flansche 21 und 22 auf, die wie bei einem herkömmlichen Spulenträger nach Figur 1 über die Querschnittsfläche des Wickelkörpers 21 hinausragen und so ein Abrutschen der Wicklung vom Wicklungsträger 21 verhindern. Zum Aufbringen der Statorspule auf den zugehörigen Eisenkern des Stators, weist der Spulenträger 20 eine Öffnung 27 auf, die sich durch die Flansche 22 und 23 und den Wickelkörper 21 hindurch erstreckt. Die Form der Öffnung ist an den Eisenkern am Stator angepasst und kann wie gezeigt von der Mantelfläche des Wickelkörpers 21 abweichen. Für einen festen Sitz des Spulenträgers auf dem Eisenkern des Stators kann der Querschnitt der Öffnung eine Verjüngung zu Erzielen einer Presskraft aufweisen.

In einer alternativen Ausführungsform weist der Wickelkörper 21 in seinem Inneren bereits einen Eisenkern auf, der mit einem elektrisch isolierenden Material überzogen ist. Dieses elektrisch isolierende Material bedeckt den Eisenkern zumindest an den Außenflächen, entlang deren der Draht 1 aufgewickelt wird.

Zum Bewickeln des Spulenträgers 20 wird der Spulen- bzw. Wickeldraht 1 in Wickelrichtung 26 an der stirnseitigen Kante des Wickelkörpers 21 entlang, d.h. parallel zu dieser Kante bzw. am Flansch 22 anliegend, beginnend von der stumpfwinkligen Überführungskante 24 an der (in der Figur 2 linken) Seitenfläche entlang, über die gerade Frontfläche und die zweite Seitenfläche zur spitzen Kante des Wickelkörpers und um diese herum geführt. Von der spitzwinkligen Kante wird der Draht 1 über schräge Frontfläche in einem zur dortigen Stirnflächenkante so schrägen Winkel zur stumpfwinkligen Kante geführt, dass er diese neben dem dort befindlichen Draht 1 umschlingt, und parallel zu und in Berührung mit diesem Draht weitere Male um den Wickelkörper geführt wird. Nach Abschluss der ersten Wickellage wird der Draht 1 an der stumpfwinkligen Kante in die nächstgelegene Nut zwischen zwei Windungen der vorhergehenden Wickellage geführt. Beim Übergang zur dritten Wickellage kann der Draht 1 an der stumpfwinkligen Kante in die nächstgelegene Nut zwischen Flansch und Windung der vorhergehenden Wickellage. Dies ist in der Frontansicht der unteren Darstellung von Figur 2 mit einer gepunkteten Linienführung angedeutet.

Ein Spulenträger 20 ist insbesondere für die Herstellung einer Spulenanordnung zur Verwendung als Polzahn in Elektromotoren geeignet. Da bei einer nach dem oben beschrieben Verfahren automatisch hergestellten Spulenanordnung sehr zuverlässig ein kompakter orthozyklischer Wicklungsaufbau erreicht werden kann, besteht keine Gefahr einer Vorschädigung der Spulenanordnung beim Einbau in den Stator. Eine entsprechend gefertigte Statorspule ermöglicht daher die Herstellung eines zuverlässigen Elektromotors mit hohem Kupferfüllfaktor. Ein solcher Motor ist insbesondere zum Einsatz bei elektromechanischen Bremsvorrichtungen, vor allem bei selbstverstärkenden Keilbremsen geeignet.

### Bezugszeichenliste

- 1: Spulen- / Wickeldraht
- 10: Stand-der-Technik-Spulenträger
- 11: Stand-der-Technik-Wickelkörper
- 12: erster Spulenträgerflansch
- 13: zweiter Spulenträgerflansch
- 14: Überführungskante
- 15: Wickelrichtung
- 20: erfindungsgemäßer Spulenträger
- 21: erfindungsgemäßer Wickelkörper
- 22: erster Spulenträgerflansch
- 23: zweiter Spulenträgerflansch
- 24: Überführungskante
- 25: spitzwinklige Kante
- 26: Wickelrichtung
- 27: Öffnung durch den Wickelkörper

## Patentansprüche

1. Spulenträger (20) mit einem Wickelkörper (21), dessen Mantelfläche einen trapezförmigen Querschnitt mit zwei im Wesentlichen rechten Winkeln und einem spitzen Winkel aufweist.

2. Spulenträger nach Anspruch 1,
**dadurch gekennzeichnet,**
**dass** der spitze Winkel 65 Grad beträgt.

3. Spulenträger nach Anspruch 1 oder 2,
**dadurch gekennzeichnet,**
**dass** zumindest eine der beiden Stirnflächen des Wickelkörpers (21) an einen Flansch (22, 23) angrenzt, der über die Querschnittsfläche des Wickelkörpers hinausragt.

4. Spulenträger nach Anspruch 3,
**dadurch gekennzeichnet,**
**dass** jede der beiden Stirnflächen des Wickelkörpers (21) an einen Flansch (22, 23) angrenzt, der über die Querschnittsfläche des Wickelkörpers hinausragt.

5. Spulenträger nach einem der vorangehenden Ansprüche,
**dadurch gekennzeichnet,**
**dass** der Spulenträger (20) eine Öffnung (26) aufweist, die sich durch den Wickelkörper (21) hindurch erstreckt.

6. Spulenträger nach Anspruch 5,
**dadurch gekennzeichnet,**
**dass** die Querschnittsgeometrie der Öffnung (26) von der der Mantelfläche des Wickelkörpers (21) verschieden ist.

7. Spulenträger nach Anspruch 5 oder 6,
**dadurch gekennzeichnet,**
**dass** der Querschnitt der Öffnung (26) zwischen den Stirnflächen des Wickelkörpers (21) nicht konstant ist.

8. Spulenträger nach einem der Ansprüche 1 bis 4,
**dadurch gekennzeichnet,**
**dass** der Wickelkörper einen Eisenkern aufweist, der so von einem elektrisch isolierenden Material umgeben ist, dass die Mantelfläche des Wickelkörpers mit trapezförmigem Querschnitt von Außenflächen des elektrisch isolierenden Materials gebildet ist.

9. Spulenanordnung mit einem Spulenträger (20) nach einem der Ansprüche 1 bis 8, wobei der Spulendraht (1) an der stumpfwinkligen Kante (24) des Wickelkörpers (21) beginnend parallel zu den Stirnflächenkanten des Wickelkörpers an der an der stumpfwinkligen Kante angrenzenden Seitenfläche entlang um den Wickelkörper herum bis zur spitzwinkligen Kante (25) des Wickelkörpers geführt ist und an der Frontfläche von der spitzwinkligen Kante (25) zu stumpfwinkligen Kante (24), so schräg zur Stirnflächenkante geführt ist, dass er an der stumpfwinkligen Kante (24) bei einem Windungssprung unmittelbar neben dem Wickeldraht (1) der vorhergehenden Windung und bei einem Wickellagensprung in die nächstgelegene Nut zwischen zwei Windungen der vorherigen Lage oder gegebenenfalls zwischen Flansch und Windung der vorherigen Lage zu liegen kommt.

10. Elektromotor mit zumindest einem Polzahn, der eine Spulenanordnung gemäß Anspruch 9 umfasst.

11. Elektromechanische Bremsvorrichtung mit einem Elektromotor nach Anspruch 10.

12. Elektromechanische Bremsvorrichtung nach Anspruch 11,
**dadurch gekennzeichnet,**
**dass** die Bremsvorrichtung als selbstverstärkende Keilbremse ausgebildet ist.

## Claims

1. Coil carrier (20) having a winding former (21), the shell of which has a trapezoidal cross section having two essentially right angles and one acute angle.

2. Coil carrier according to claim 1,
**characterized in that**
the acute angle is 65 degrees.

3. Coil carrier according to claim 1 or 2,
**characterized in that**
at least one of the two end faces of the winding former (21) abuts against a flange (22, 23) which projects beyond the cross sectional area of the winding former.

4. Coil carrier according to claim 3,
**characterized in that**
each of the two end faces of the winding former (21) abuts against a flange (22, 23) which projects beyond the cross sectional area of the winding former.

5. Coil carrier according to one of the preceding claims,
**characterized in that**
the coil carrier (20) has an opening (26) which extends right through the winding former (21).

6. Coil carrier according to claim 5,
**characterized in that**
the cross sectional geometry of the opening (26) is different from that of the shell of the winding former (21).

7. Coil carrier according to claim 5 or 6,
**characterized in that**
the cross section of the opening (26) between the end faces of the winding former (21) is not constant.

8. Coil carrier according to one of claims 1 to 4,
**characterized in that**
the winding former has an iron core which is surrounded by an electrically insulating material such that the shell of the winding former is formed having a trapezoidal cross section of outer surfaces of the electrically insulating material.

9. Coil arrangement having a coil carrier (20) according to one of claims 1 to 8, whereby the coil wire (1) is guided on the obtuse angled edge (24) of the winding former (21), beginning parallel to the end face edges of the winding former, along the side face abutting against the obtuse angled edge, around the winding former, to the acute angled edge (25) of the winding former, and is guided on the front face from the acute angled edge (25) to the obtuse angled edge (24) obliquely with respect to the front face edge, such that it comes to be located on the obtuse angled edge (24) in the case of a winding transition directly beside the winding wire (1) of the previous winding and in the case of a winding layer transition in the nearest groove between two windings of the previous layer, or if applicable between flange and winding of the previous layer.

10. Electric motor having at least one pole tooth, which includes a coil arrangement according to claim 9.

11. Electromechanical braking device having an electric motor according to claim 10.

12. Electromechanical braking device according to claim 11,
**characterized in that**
the braking device is designed as a self-energizing wedge brake.

## Revendications

1. Support de bobine (20) avec un corps d'enroulement (21), dont la surface d'enveloppe présente une section transversale trapézoïdale avec deux angles sensiblement droits et un angle aigu.

2. Support de bobine selon la revendication 1,
**caractérisé en ce que**
l'angle aigu est de 65 degrés.

3. Support de bobine selon la revendication 1 ou 2,
**caractérisé en ce que**
au moins l'une des deux faces frontales du corps d'enroulement (21) jouxte une bride (22, 23) qui dépasse de la surface en section transversale du corps d'enroulement.

4. Support de bobine selon la revendication 3,
**caractérisé en ce que**
chacune des deux faces frontales du corps d'enroulement (21) jouxte une bride (22, 23) qui dépasse de la surface en section transversale du corps d'enroulement.

5. Support de bobine selon l'une quelconque des revendications précédentes,
**caractérisé en ce que**
le support de bobine (20) présente une ouverture (26) qui s'étend à travers le corps d'enroulement (21).

6. Support de bobine selon la revendication 5,
**caractérisé en ce que**
la géométrie en section transversale de l'ouverture (26) est différente de celle de la surface d'enveloppe du corps d'enroulement (21).

7. Support de bobine selon la revendication 5 ou 6,
**caractérisé en ce que**
la section transversale de l'ouverture (26) n'est pas constante entre les faces frontales du corps d'enroulement (21).

8. Support de bobine selon l'une quelconque des revendications 1 à 4,
**caractérisé en ce que**
le corps d'enroulement présente un noyau de fer, qui est entouré d'un matériau isolant électriquement de sorte que la surface d'enveloppe du corps d'enroulement de section transversale trapézoïdale soit formée de surfaces externes du matériau isolant électriquement.

9. Agencement de bobine, comprenant un support de bobine (20) selon l'une quelconque des revendications 1 à 8, dans lequel le fil de bobine (1) est guidé sur l'arête à angle obtus (24) du corps d'enroulement (21), en partant parallèlement aux arêtes des faces frontales du corps d'enroulement le long de la surface latérale adjacente à l'arête à angle obtus, autour du corps d'enroulement jusqu'à l'arête à angle aigu (25) du corps d'enroulement et sur la face frontale allant de l'arête à angle aigu (25) jusqu'à l'arête à angle obtus (24), en oblique par rapport à l'arête de la face frontale de sorte qu'il vienne s'appliquer sur l'arête à angle obtus (24) par un saut de spire juste à côté du fil d'enroulement (1) de la spire précédente et par un saut de couche d'enroulement dans la rainure la plus proche entre deux spires de la couche précédente ou éventuellement entre la bride et la spire de la couche précédente.

10. Moteur électrique avec au moins une dent polaire qui comprend un agencement de bobine selon la revendication 9.

11. Dispositif de freinage électromécanique, comprenant un moteur électrique selon la revendication 10.

12. Dispositif de freinage électromécanique selon la revendication 11,
**caractérisé en ce que**
le dispositif de freinage se présente sous la forme d'un frein à coin à amplification automatique
